# EUROPEAN PATENT SPECIFICATION

(11) **EP 3 282 806 B1**
(45) Date of publication and mention of the grant of the patent: **27.05.2020**
(21) Application number: 17185398.9
(22) Date of filing: 08.08.2017
(51) Int. Cl.: H04W 76/27, H04W 76/11

(54) **DEVICE AND METHOD OF HANDLING A SIGNALING RADIO BEARER FOR NARROWBAND INTERNET OF THINGS COMMUNICATION**
VORRICHTUNG UND VERFAHREN ZUR HANDHABUNG EINES SIGNALGEBUNGSFUNKTRÄGERS FÜR SCHMALBANDIGE INTERNET-DER-DINGE-KOMMUNIKATION
DISPOSITIF ET PROCÉDÉ DE MANIPULATION D'UN SUPPORT RADIO DE SIGNALISATION POUR LA COMMUNICATION D'INTERNET DES OBJETS À BANDE ÉTROITE

(30) Priority: 10.08.2016 US 201662373331 P
(43) Date of publication of application: 14.02.2018
(73) Proprietor: HTC Corporation, Taoyuan City 330 (TW)
(72) Inventor: Chen, Te-Ming, Taoyuan City 330 (TW)
(74) Representative: Murgitroyd & Company

(56) References cited:
- WO-A1-2015/163625
- US-A1- 2015 146 617
- US-A1- 2016 174 281
- ALCATEL-LUCENT ET AL: "Comments and suggestions on baseline RRC CR for DC", 3GPP DRAFT; R2-145109-DC-RRC-CR-COMMENTS-V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA; 20141117 - 20141121 8 November 2014 (2014-11-08), XP050886672, Retrieved from the Internet: URL:http://www.3gpp.org/ftp/tsg_ran/WG2_RL 2/TSGR2_88/Docs/ [retrieved on 2014-11-08]
- HTC ET AL: "Support of full configuration per CG", 3GPP DRAFT; R2-1711666 SUPPORT OF FULL CONFIGURATION PER CG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 29 September 2017 (2017-09-29), XP051355707, Retrieved from the Internet: URL:http://www.3gpp.org/ftp/tsg_ran/WG2_RL 2/TSGR2_99bis/Docs/ [retrieved on 2017-09-29]
- KEYSIGHT TECHNOLOGIES: "Introduction default RRC messages for NB-IoT", 3GPP DRAFT; R5-164070_INTRODUCTION DEFAULT RRC MESSAGES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG5, no. Sophia Antipolis, France; 20160628 - 20160630 30 June 2016 (2016-06-30), XP051120525, Retrieved from the Internet: URL:http://www.3gpp.org/ftp/tsg_ran/WG5_Te st_ex-T1/TSGR5_AHs/2016-06-27_IoT_Adhoc_1/ Docs/ [retrieved on 2016-06-30]
- HUAWEI (RAPPORTEUR): "Running CR to capture agreements on NB-IoT", 3GPP DRAFT; R2-162315-36331_RUNNING_CR_ALL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 2 April 2016 (2016-04-02), XP051082375, Retrieved from the Internet: URL:http://www.3gpp.org/ftp/tsg_ran/WG2_RL 2/TSGR2_93bis/Docs/ [retrieved on 2016-04-02]
- HUAWEI (RAPPORTEUR): "36.331 Running CR to capture agreements on NB-IoT", 3GPP DRAFT; R2-164290_36331_RUNNING_CR_TO_CAPTURE_NBIO T_AGREEMENTS_AND ASN.1_REVIEW_V1, 3RD GENERATION PARTNERSHIP PROJECT (3GPP), MOBILE COMPETENCE CENTRE ; 650, ROUTE DES LUCIOLES ; F-06921 SOPHIA-A , vol. RAN WG2, no. Nanjing; 20160523 - 20160527 22 May 2016 (2016-05-22), XP051105546, Retrieved from the Internet: URL:http://www.3gpp.org/ftp/Meetings_3GPP_ SYNC/RAN2/Docs/ [retrieved on 2016-05-22]
- "3rd Generation Partnership Project; Technical Specification Group Radio Access Network; Evolved Universal Terrestrial Radio Access (E-UTRA); Radio Resource Control (RRC); Protocol specification (Release 13)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.2.0, 11 July 2016 (2016-07-11), pages 1-623, XP051123115, [retrieved on 2016-07-11]
- HTC: "Correction on full configuration", 3GPP DRAFT; 36331_CR2280_(REL-13)_R2-165133, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 12 August 2016 (2016-08-12), XP051133580, Retrieved from the Internet: URL:http://www.3gpp.org/ftp/tsg_ran/WG2_RL 2/TSGR2_95/Docs/ [retrieved on 2016-08-12]

## Description

### Background of the Invention

### 1. Field of the Invention

The present invention relates to a device and a method used in a wireless communication system, and more particularly, to a device and a method of handling a signaling radio bearer for a narrowband Internet of Things (NB-IoT) communication.

### 2. Description of the Prior Art

In a long-term evolution (LTE) system, a radio access network known as an evolved universal terrestrial radio access network (E-UTRAN) includes at least one evolved Node-B (eNB) for communicating with a user equipment (UE), and for communicating with a core network. The core network may include mobility management and Quality of Service (QoS) control for the UE.

Alcatel-Lucent, Alcatel-Lucent Shanghai Bell: "Comments and suggestions on baseline RRC CR for DC", 3GPP TSG RAN WG2 #88 R2-145109, 17-21 November 2014; 3GPP TSG RAN WG5 Meeting #1/IoT Adhoc R5-164070, 28-30 June 2016; 3GPP TSG RAN WG2 #93BIS Meeting R2-162315, 11-15 April 2016; Huawei (Rapporteur): "36.331 Running CR to capture agreements on NB-IoT", 3GPP draft, R2-164290; 3GPP TS 36.331 TSG RAN E-UTRA, no. V13.2.0; and HTC: "Correction on full configuration", 3GPP TS 36.331_CR2280_Rel-13, R2-165133 may be regarded as background art useful for understanding the disclosure.

### Summary of the Invention

It is an object of an embodiment of the present invention to provide a communication device and method for handling a signaling radio bearer for a narrowband Internet of Things (NB-IoT) communication to specify undefined operations of the NB-IoT communication. This object can be achieved by the features as defined in the independent claims. Further enhancements are characterised by the dependent claims.

According to one embodiment, a communication device for handling a signaling radio bearer (SRB) for a narrowband internet of things (NB-IoT) communication comprises a storage device for storing instructions and a processing circuit coupled to the storage device. The processing circuit is configured to execute the instructions stored in the storage device. The instructions comprise receiving a RRCConnectionReconfiguration-NB message from a network, when the communication device is in a RRC_CONNECTED mode, wherein the RRCConnectionReconfiguration-NB message indicates a first full configuration and comprises a first SRB configuration; and applying a default SRB configuration, a default RLC configuration and a default logical channel configuration for a SRB 1 (SRB1) according to the SRB configuration, when receiving the RRCConnectionReconfiguration-NB message.

According to one embodiment, a communication device for handling a signaling radio bearer (SRB) for a narrowband internet of things (NB-IoT) communication comprises a storage device for storing instructions and a processing circuit coupled to the storage device. The processing circuit is configured to execute the instructions stored in the storage device. The instructions comprise receiving a RRC connection reconfiguration message from a network, when the communication device is in a RRC_CONNECTED mode, wherein the RRC connection reconfiguration message indicates a full configuration and comprises a SRB configuration; checking whether there is any srb-Identity value comprised in the SRB configuration or not, after receiving the RRC connection reconfiguration message; applying a default SRB configuration, a default RLC configuration and a default logical channel configuration for at least one SRB according to at least one srb-Identity value in the SRB configuration, when there is the at least one srb-Identity value comprised in the SRB configuration; and applying the default SRB configuration, the default RLC configuration and the default logical channel configuration for a SRB1, when there is no srb-Identity value comprised in the SRB configuration.

According to one embodiment, a communication device for handling a signaling radio bearer (SRB) for a narrowband internet of things (NB-IoT) communication comprises a storage device for storing instructions and a processing circuit coupled to the storage device. The processing circuit is configured to execute the instructions stored in the storage device. The instructions comprise receiving a RRC connection reconfiguration message from a network, when the communication device is in a RRC_CONNECTED mode, wherein the RRC connection reconfiguration message indicates a full configuration and comprises a SRB configuration; checking whether the SRB configuration is a srb-ToAddModList or a srb-ToAddModList-NB, after receiving the RRC connection reconfiguration message; applying a default SRB configuration, a default RLC configuration and a default logical channel configuration for at least one SRB according to at least one srb-Identity value in the SRB configuration, if the SRB configuration is the srb-ToAddModList; and applying the default SRB configuration, the default RLC configuration and the default logical channel configuration for a SRB1, if the SRB configuration is the srb-ToAddModList-NB.

### Brief Description of the Drawings

The accompanying drawings illustrate presently exemplary embodiments of the disclosure and serve to explain, by way of example, the principles of the disclosure.
Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.
Fig. 5 is a flowchart of a process according to an example of the present invention.
Fig. 6 is a flowchart of a process according to an example of the present invention.

### Detailed Description

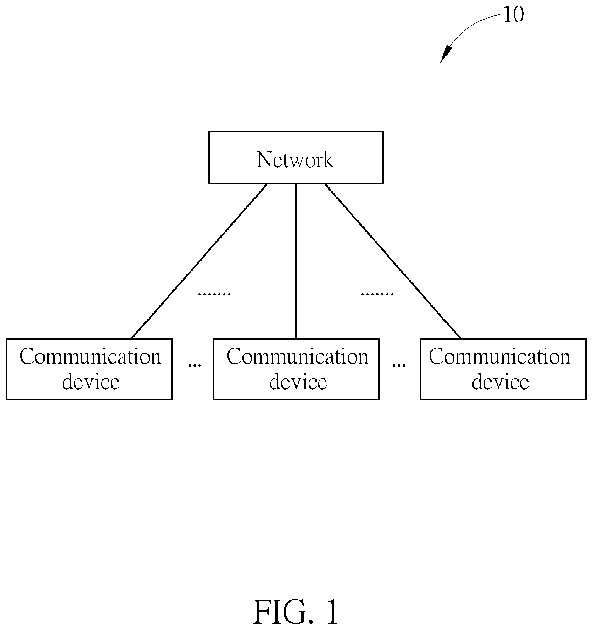

Fig. 1 is a schematic diagram of a wireless communication system 10 according to an example of the present invention. The wireless communication system 10 is briefly composed of a network and a plurality of communication devices. The network and a communication device communicate with each other via one or more cells on one or more carriers of licensed band(s) and/or unlicensed band(s). The one or more cells may be operated in the same or different frame structure types, or in the same or different duplexing modes, i.e. frequency-division duplexing (FDD) and time-division duplexing (TDD).

In Fig. 1, the network and the communication devices are simply utilized for illustrating the structure of the wireless communication system 10. The network may include a radio access network (RAN) including at least one base station (BS). Practically, the RAN may be an evolved universal terrestrial radio access network (E-UTRAN) including at least one evolved Node-B (eNB). The RAN may be a fifth generation (5G) network including at least one 5G BS (e.g., gNB) which employs orthogonal frequency-division multiplexing (OFDM) and/or non-OFDM and a transmission time interval (TTI) shorter than 1ms (e.g. 100 or 200 microseconds), to communicate with the communication devices. In general, a BS may also be used to refer any of the eNB and the 5G BS. Furthermore, the network may also include a core network which includes network entities connecting to the RAN.

A communication device may be a user equipment (UE), a narrowband Internet of Things (NB-IoT) UE, a machine type communication (MTC) device, a mobile phone, a laptop, a tablet computer, an electronic book, a portable computer system, a vehicle, or an aircraft. In addition, the network and the communication device can be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

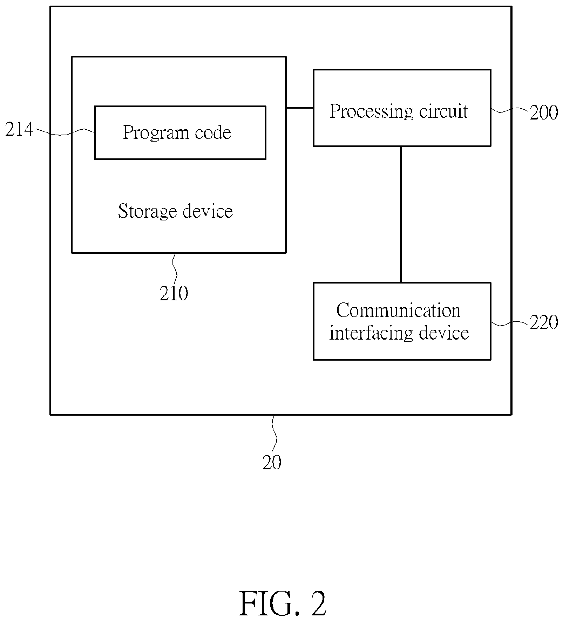

Fig. 2 is a schematic diagram of a communication device 20 according to an example of the present invention. The communication device 20 may be a communication device or the network shown in Fig. 1, but is not limited herein. The communication device 20 may include a processing circuit 200 such as a microprocessor or Application Specific Integrated Circuit (ASIC), a storage device 210 and a communication interfacing device 220. The storage device 210 may be any data storage device that may store a program code 214, accessed and executed by the processing circuit 200. Examples of the storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The communication interfacing device 220 includes a transceiver and is used to transmit and receive signals (e.g., data, messages and/or packets) according to processing results of the processing circuit 200.

In the following embodiments, a UE is used to represent a communication device in Fig. 1, to simplify the illustration of the embodiments.

A scenario assumed according to an example of the present invention is stated as follows. After receiving a RRC connection reconfiguration message from an eNB and a fullConfig is set to TRUE, the UE applies default radio resource configurations. Based on a srb-Identity value included in a receiving srb-ToAddModList, the UE reconfigures corresponding signalling radio bearers (SRBs) to default values. However, the situation is different for a narrowband Internet of Things (NB-IoT) communication. The eNB does not include any srb-Identity value in a srb-ToAddModList-NB for a NB-IoT UE. Accordingly, the NB-IoT UE does not know how to operate, after receiving a RRC connection reconfiguration message for a full configuration. Thus, operations of the NB-loT UE should be defined.

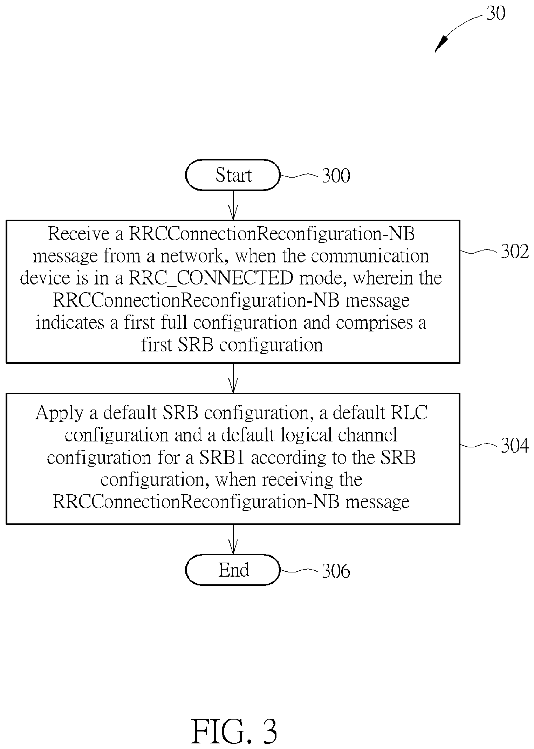

Fig. 3 is a flowchart of a process 30 according to an example of the present invention. The process 30 may be utilized in a UE to communicate with a BS (e.g., in the network in Fig. 1), and includes the following steps:
Step 300: Start.
Step 302: Receive a RRCConnectionReconfiguration-NB message from a network, when the communication device is in a RRC_CONNECTED mode, wherein the RRCConnectionReconfiguration-NB message indicates a first full configuration and comprises a first SRB configuration.
Step 304: Apply a default SRB configuration, a default RLC configuration and a default logical channel configuration for a SRB 1 (SRB1) according to the SRB configuration, when receiving the RRCConnectionReconfiguration-NB message.
Step 306: End.

According to the process 30, a UE in RRC_CONNECTED mode receives a RRCConnectionReconfiguration-NB message from a network. The RRCConnectionReconfiguration-NB message may indicate a first full configuration (e.g., the RRCConnectionReconfiguration-NB message includes fullConfig set to TRUE), and may comprise a first SRB configuration (e.g., srb-ToAddModList-NB). It should be noted that the SRB configuration may not include a SRB identity (e.g., srb-ToAddModList-NB does not include a srb-Identity). When receiving the RRCConnectionReconfiguration-NB message from the network, the UE applies a default SRB configuration, a default RLC configuration and a default logical channel configuration for a SRB1.

In one example, the UE receives a RRCConnectionReconfiguration message from the network. The RRCConnectionReconfiguration message indicates a second full configuration (e.g., the RRCConnectionReconfiguration message includes a "fullConfig" set to TRUE), and includes a second SRB configuration (e.g., srb-ToAddModList), wherein the second SRB configuration includes at least one SRB identity (e.g., srb-ToAddModList includes at least one srb-Identity). According to the at least one SRB identity included in the second SRB configuration, the UE applies the default SRB, the default RLC and the default logical channel configuration for at least one SRB (e.g., which is corresponding to the at least one SRB identity).

In one example, the UE is a NB-loT UE or a LTE UE that supports at least one NB-loT capability. In one example, the UE further applies the default SRB configuration, the default RLC configuration and the default logical channel configuration for all SRBs supported by the UE.

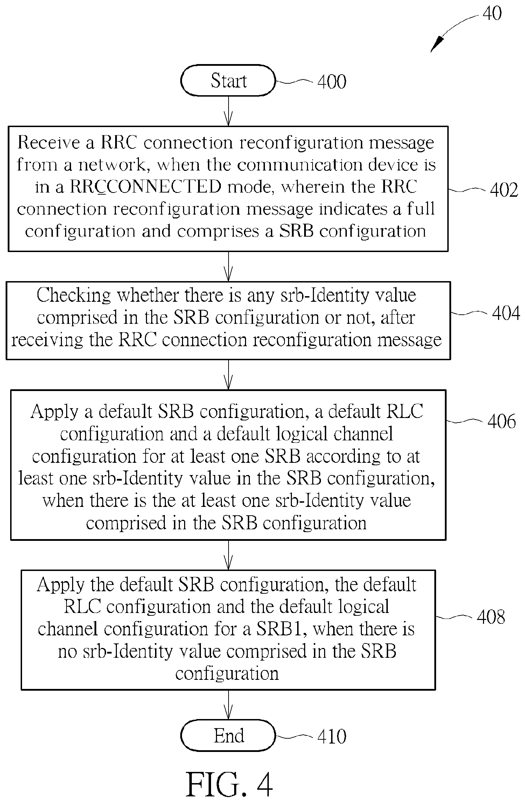

Fig. 4 is a flowchart of a process 40 according to an example of the present invention. The process 40 may be utilized in a UE to communicate with a BS (e.g., in the network in Fig. 1), and includes the following steps:
Step 400: Start.
Step 402: Receive a RRC connection reconfiguration message from a network, when the communication device is in a RRC_CONNECTED mode, wherein the RRC connection reconfiguration message indicates a full configuration and comprises a SRB configuration.
Step 404: Checking whether there is any srb-Identity value comprised in the SRB configuration or not, after receiving the RRC connection reconfiguration message.
Step 406: Apply a default SRB configuration, a default RLC configuration and a default logical channel configuration for at least one SRB according to at least one srb-Identity value in the SRB configuration, when there is the at least one srb-Identity value comprised in the SRB configuration.
Step 408: Apply the default SRB configuration, the default RLC configuration and the default logical channel configuration for a SRB1, when there is no srb-Identity value comprised in the SRB configuration.
Step 410: End.

According to the process 40, a UE in a RRC_CONNECTED mode receives a RRC connection reconfiguration message from a network. The RRC connection reconfiguration message may indicate a full configuration (e.g., the RRC connection reconfiguration message includes a "fullConfig" set to TRUE), and may comprise a SRB configuration. After receiving the RRC connection reconfiguration message from the network, the UE checks whether there is any srb-Identity value comprised in the SRB configuration or not. When there is at least one srb-Identity value comprised in the SRB configuration, the UE applies a default SRB configuration, a default RLC configuration and a default logical channel configuration for at least one SRB according to (e.g., corresponding to) the at least one srb-Identity value. When there is no srb-Identity value in the SRB configuration, the UE applies the default SRB configuration, the default RLC configuration and the default logical channel configuration for a SRB1.

In one example, the RRC connection reconfiguration message is a RRCConnectionReconfiguration message or a RRCConnectionReconfiguration-NB message. In one example, the SRB configuration is a srb-ToAddModList or a srb-ToAddModList-NB. In one example, the UE is a NB-loT UE or a LTE UE that supports at least one NB-loT capability. In one example, the UE further applies the default SRB configuration, the default RLC configuration and the default logical channel configuration for all SRBs supported by the UE.

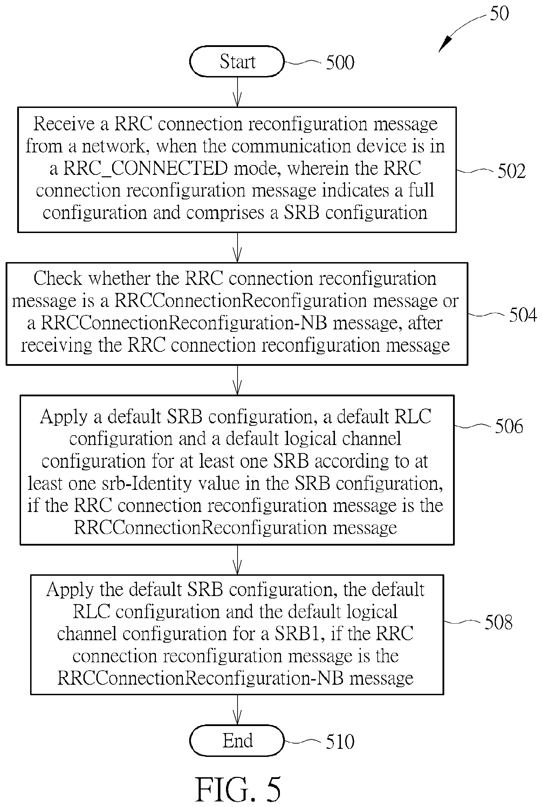

Fig. 5 is a flowchart of a process 50 according to an example of the present invention. The process 50 may be utilized in a UE to communicate with a BS (e.g., in the network in Fig. 1), and includes the following steps:
Step 500: Start.
Step 502: Receive a RRC connection reconfiguration message from a network, when the communication device is in a RRC_CONNECTED mode, wherein the RRC connection reconfiguration message indicates a full configuration and comprises a SRB configuration.
Step 504: Check whether the RRC connection reconfiguration message is a RRCConnectionReconfiguration message or a RRCConnectionReconfiguration-NB message, after receiving the RRC connection reconfiguration message.
Step 506: Apply a default SRB configuration, a default RLC configuration and a default logical channel configuration for at least one SRB according to at least one srb-Identity value in the SRB configuration, if the RRC connection reconfiguration message is the RRCConnectionReconfiguration message.
Step 508: Apply the default SRB configuration, the default RLC configuration and the default logical channel configuration for a SRB1, if the RRC connection reconfiguration message is the RRCConnectionReconfiguration-NB message.
Step 510: End.

According to the process 50, a UE in a RRC_CONNECTED mode receives a RRC connection reconfiguration message from the network. The RRC connection reconfiguration message indicates a full configuration (e.g., the message comprises a "fullConfig" set to TRUE), and comprises a SRB configuration. After receiving the RRC connection reconfiguration message from the network, the UE checks whether the RRC connection reconfiguration message is a RRCConnectionReconfiguration message or a RRCConnectionReconfiguration-NB message. If the RRC connection reconfiguration message is the RRCConnectionReconfiguration message, the UE applies a default SRB configuration, a default RLC configuration and a default logical channel configuration for at least one SRB according to (e.g., corresponding to) at least one srb-Identity value in the SRB configuration. If the RRC connection reconfiguration message is the RRCConnectionReconfiguration-NB message, the UE applies the default SRB configuration, the default RLC configuration and the default logical channel configuration for a SRB1.

In one example, the UE is a NB-loT UE or a LTE UE that supports at least one NB-loT capability. In one example, the UE further applies the default SRB configuration, the default RLC configuration and the default logical channel configuration for all SRBs supported by the UE. In one example, the SRB configuration is a srb-ToAddModList or a srb-ToAddModList-NB.

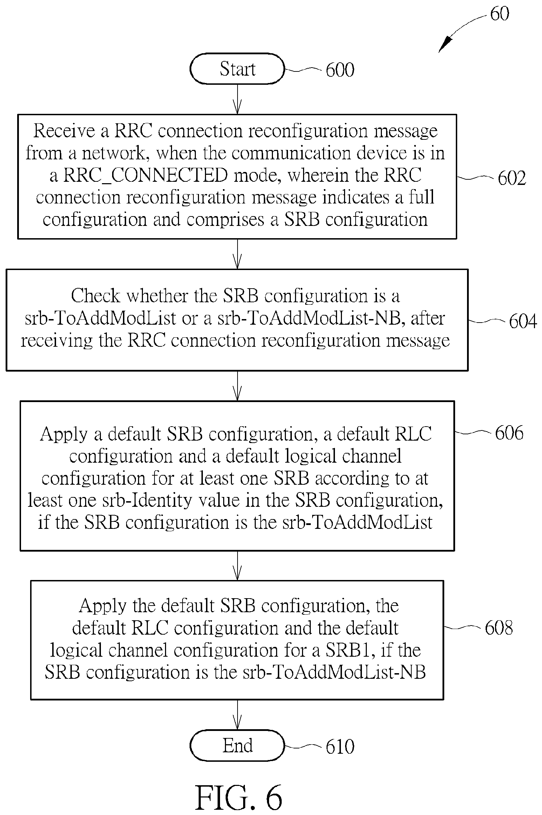

Fig. 6 is a flowchart of a process 60 according to an example of the present invention. The process 60 may be utilized in a UE to communicate with a BS (e.g., in the network in Fig. 1), and includes the following steps:
Step 600: Start.
Step 602: Receive a RRC connection reconfiguration message from a network, when the communication device is in a RRC_CONNECTED mode, wherein the RRC connection reconfiguration message indicates a full configuration and comprises a SRB configuration.
Step 604: Check whether the SRB configuration is a srb-ToAddModList or a srb-ToAddModList-NB, after receiving the RRC connection reconfiguration message.
Step 606: Apply a default SRB configuration, a default RLC configuration and a default logical channel configuration for at least one SRB according to at least one srb-Identity value in the SRB configuration, if the SRB configuration is the srb-ToAddModList.
Step 608: Apply the default SRB configuration, the default RLC configuration and the default logical channel configuration for a SRB1, if the SRB configuration is the srb-ToAddModList-NB.
Step 610: End.

According to the process 60, a UE in a RRC_CONNECTED mode receives a RRC connection reconfiguration message from a network. The RRC connection reconfiguration message indicates a full configuration (e.g., the message including a "fullConfig" set to TRUE), and comprises a SRB configuration. After receiving the RRC connection reconfiguration message from the network, the UE checks whether the SRB configuration is a srb-ToAddModList or a srb-ToAddModList-NB. If the SRB configuration is the srb-ToAddModList, the UE applies a default SRB configuration, a default RLC configuration and a default logical channel configuration for at least one SRB according to (e.g., corresponding to) at least one srb-Identity value in the SRB configuration. If the SRB configuration is the srb-ToAddModList-NB, the UE applies the default SRB configuration, the default RLC configuration and the default logical channel configuration for a SRB1.

In one example, the UE is a NB-loT UE or a LTE UE that supports at least one NB-loT capability. In one example, the UE further applies the default SRB configuration, the default RLC configuration and the default logical channel configuration for all SRBs supported by the UE. In one example, the RRC connection reconfiguration message is a RRCConnectionReconfiguration message or a RRCConnectionReconfiguration-NB message.

Examples for illustrating correspondence between srb-Identity value(s) and SRB(s) in at least one of the process 40, 50 and 60 are described as follows. In one example, if the srb-Identity value is 2, the UE applies the default SRB configuration, the default RLC configuration and the default logical channel configuration for a SRB 2 (SRB2). In one example, if the SRB configuration includes a first srb-Identity value which is 1 and a second srb-Identity value which is 2, the UE applies the default SRB configuration, the default RLC configuration and the default logical channel configuration for the SRB1 and the SRB2.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. Any of the above processes and examples above may be compiled into the program code 214.

To sum up, the present invention provides a device and a method for handling a NB-loT communication. Correct operations can be performed after receiving a RRC connection reconfiguration message. Thus, the problem in the art is solved.

## Claims

1. A user equipment, UE, for handling a signaling radio bearer, SRB, of a narrowband internet of things, NB-IoT, communication, comprising:
a storage device (210) for storing instructions;
a processing circuit (200), coupled to the storage device (210), wherein the storage device (210) stores, and the processing circuit (200) is configured to execute, the instructions of:
receiving a RRC connection reconfiguration message from a network, when the UE is in RRC_CONNECTED mode, wherein the RRC connection reconfiguration message indicates a full configuration and comprises a SRB configuration;
checking whether there is any srb-Identity value comprised in the SRB configuration or not, after receiving the RRC connection reconfiguration message;
applying a default SRB configuration, a default RLC configuration and a default logical channel configuration for at least one SRB according to at least one srb-Identity value in the SRB configuration, when there is the at least one srb-Identity value comprised in the SRB configuration; and
applying the default SRB configuration, the default RLC configuration and the default logical channel configuration for SRB Type 1, SRB1, when there is no srb-Identity value comprised in the SRB configuration; and
wherein the UE supports at least one NB-loT capability;
wherein the RRC connection reconfiguration message is a RRCConnectionReconfiguration message or a RRCConnectionReconfiguration-NB message; and
wherein the SRB configuration is a srb-ToAddModList or a srb-ToAddModList-NB; and
applying the default SRB configuration, the default RLC configuration and the default logical channel configuration for all SRBs supported by the UE.

2. The UE of claim 1, wherein the storage device (210) further stores, and the processing circuit (200) is further configured to execute, instructions of:
receiving a RRCConnectionReconfiguration message from the network, when the UE is in RRC_CONNECTED mode, wherein the RRCConnectionReconfiguration message indicates a second full configuration and comprises a second SRB configuration comprising at least one SRB identity; and
applying the default SRB configuration, the default RLC configuration and the default logical channel configuration for at least one SRB according to the at least one SRB identity.

3. A user equipment, UE, for handling a signaling radio bearer, SRB, of a narrowband internet of things, NB-IoT, communication, comprising:
a storage device (210) for storing instructions;
a processing circuit (200), coupled to the storage device (210), wherein the storage device (210) stores, and the processing circuit (200) is configured to execute, the instructions of:
receiving a RRC connection reconfiguration message from a network, when the UE is in RRC_CONNECTED mode, wherein the RRC connection reconfiguration message indicates a full configuration and comprises a SRB configuration;
checking whether the SRB configuration is a srb-ToAddModList or a srb-ToAddModList-NB, after receiving the RRC connection reconfiguration message;
applying a default SRB configuration, a default RLC configuration and a default logical channel configuration for at least one SRB according to at least one srb-Identity value in the SRB configuration, if the SRB configuration is the srb-ToAddModList; and
applying the default SRB configuration, the default RLC configuration and the default logical channel configuration for SRB Type 1, SRB1, if the SRB configuration is the srb-ToAddModList-NB; and
wherein the UE supports at least one NB-loT capability; and
wherein the RRC connection reconfiguration message is a RRCConnectionReconfiguration message or a RRCConnectionReconfiguration-NB message; and
applying the default SRB configuration, the default RLC configuration and the default logical channel configuration for all SRBs supported by the UE.

4. The UE of claim 3, wherein the storage device (210) further stores, and the processing circuit (200) is further configured to execute, instructions of:
receiving a RRCConnectionReconfiguration message from the network, when the UE is in RRC_CONNECTED mode, wherein the RRCConnectionReconfiguration message indicates a second full configuration and comprises a second SRB configuration comprising at least one SRB identity; and
applying the default SRB configuration, the default RLC configuration and the default logical channel configuration for at least one SRB according to the at least one SRB identity.

## Patentansprüche

1. Ein Benutzerendgerät (UE) zur Handhabung eines Signalgebungsfunkträgers (SRB) einer schmalbandigen Internet-der-Dinge-Kommunikation (NB-loT), das Folgendes beinhaltet:
eine Speichervorrichtung (210) zum Speichern von Befehlen;
eine Verarbeitungsschaltung (200), die an die Speichervorrichtung (210) gekoppelt ist, wobei die Speichervorrichtung (210) folgende Befehle speichert und die Verarbeitungsschaltung (200) konfiguriert ist, um folgende Befehle auszuführen:
Empfangen einer RRC-Connection-Reconfiguration-Nachricht aus einem Netzwerk, wenn das UE im RRC_CONNECTED-Modus ist, wobei die RRC-Connection-Reconfiguration-Nachricht eine vollständige Konfiguration anzeigt und eine SRB-Konfiguration beinhaltet;
Prüfen, ob ein in der SRB-Konfiguration beinhalteter srb-Identity-Wert vorliegt oder nicht, nach dem Empfangen der RRC-Connection-Reconfiguration-Nachricht;
Anwenden einer Standard-SRB-Konfiguration, einer Standard-RLC-Konfiguration und einer Standardkonfiguration eines logischen Kanals für mindestens einen SRB gemäß mindestens einem srb-Identity-Wert in der SRB-Konfiguration, wenn der mindestens eine in der SRB-Konfiguration beinhaltete srb-Identity-Wert vorliegt; und
Anwenden der Standard-SRB-Konfiguration, der Standard-RLC-Konfiguration und der Standardkonfiguration eines logischen Kanals für SRB-Typ 1 (SRB1), wenn kein in der SRB-Konfiguration beinhalteter srb-Identity-Wert vorliegt; und
wobei das UE mindestens eine NB-IoT-Fähigkeit unterstützt; wobei die RRC-Connection-Reconfiguration-Nachricht eine RRCConnectionReconfiguration-Nachricht oder eine RRCConnectionReconfiguration-NB-Nachricht ist; und
wobei die SRB-Konfiguration eine srb-ToAddModList oder eine srb-ToAddModList-NB ist; und
Anwenden der Standard-SRB-Konfiguration, der Standard-RLC-Konfiguration und der Standardkonfiguration eines logischen Kanals für alle vom UE unterstützten SRBs.

2. UE gemäß Anspruch 1, wobei die Speichervorrichtung (210) ferner folgende Befehle speichert und die Verarbeitungsschaltung (200) ferner konfiguriert ist, um folgende Befehle auszuführen:
Empfangen einer RRCConnectionReconfiguration-Nachricht aus dem Netzwerk, wenn das UE im RRC_CONNECTED-Modus ist, wobei die RRCConnectionReconfiguration- Nachricht eine zweite vollständige Konfiguration anzeigt und eine zweite, mindestens eine SRB-Identität beinhaltende SRB-Konfiguration beinhaltet; und
Anwenden der Standard-SRB-Konfiguration, der Standard-RLC-Konfiguration und der Standardkonfiguration eines logischen Kanals für mindestens einen SRB gemäß der mindestens einen SRB-Identität.

3. Ein Benutzerendgerät (UE) zur Handhabung eines Signalgebungsfunkträgers (SRB) einer schmalbandigen Internet-der-Dinge-Kommunikation (NB-loT), das Folgendes beinhaltet:
eine Speichervorrichtung (210) zum Speichern von Befehlen;
eine Verarbeitungsschaltung (200), die an die Speichervorrichtung (210) gekoppelt ist, wobei die Speichervorrichtung (210) folgende Befehle speichert und die Verarbeitungsschaltung (200) konfiguriert ist, um folgende Befehle auszuführen:
Empfangen einer RRC-Connection-Reconfiguration-Nachricht aus einem Netzwerk, wenn das UE im RRC_CONNECTED-Modus ist, wobei die RRC-Connection-Reconfiguration-Nachricht eine vollständige Konfiguration anzeigt und eine SRB-Konfiguration beinhaltet;
Prüfen, ob die SRB-Konfiguration eine srb-ToAddModList oder eine srb-ToAddModList- NB ist, nach dem Empfangen der RRC-Connection-Reconfiguration-Nachricht;
Anwenden einer Standard-SRB-Konfiguration, einer Standard-RLC-Konfiguration und einer Standardkonfiguration eines logischen Kanals für mindestens einen SRB gemäß mindestens einem srb-Identity-Wert in der SRB-Konfiguration, wenn die SRB- Konfiguration die srb-ToAddModList ist; und
Anwenden der Standard-SRB-Konfiguration, der Standard-RLC-Konfiguration und der Standardkonfiguration eines logischen Kanals für SRB-Typ 1 (SRB1), wenn die SRB- Konfiguration die srb-ToAddModList-NB ist; und
wobei das UE mindestens eine NB-IoT-Fähigkeit unterstützt; und wobei die RRC-Connection-Reconfiguration-Nachricht eine RRCConnectionReconfiguration-Nachricht oder eine RRCConnectionReconfiguration- NB-Nachricht ist; und
Anwenden der Standard-SRB-Konfiguration, der Standard-RLC-Konfiguration und der Standardkonfiguration eines logischen Kanals für alle vom UE unterstützten SRBs.

4. UE gemäß Anspruch 3, wobei die Speichervorrichtung (210) ferner folgende Befehle speichert und die Verarbeitungsschaltung (200) ferner konfiguriert ist, um folgende Befehle auszuführen:
Empfangen einer RRCConnectionReconfiguration-Nachricht aus dem Netzwerk, wenn das UE im RRC_CONNECTED-Modus ist, wobei die RRCConnectionReconfiguration- Nachricht eine zweite vollständige Konfiguration anzeigt und eine zweite, mindestens eine SRB-Identität beinhaltende SRB-Konfiguration beinhaltet; und
Anwenden der Standard-SRB-Konfiguration, der Standard-RLC-Konfiguration und der Standardkonfiguration eines logischen Kanals für mindestens einen SRB gemäß der mindestens einen SRB-Identität.

## Revendications

1. Un équipement utilisateur (UE, User Equipment) pour la gestion d'un support radio de signalisation (SRB, Signaling Radio Bearer) d'une communication par l'Internet des objets à bande étroite (NB-IoT, Narrowband Internet of Things), comprenant :
un dispositif de stockage (210) pour le stockage d'instructions ;
un circuit de traitement (200), couplé à le dispositif de stockage (210), où le dispositif de stockage (210) stocke, et le circuit de traitement (200) est configuré pour exécuter, les instructions :
de réception d'un message de reconfiguration de connexion RRC en provenance d'un réseau, quand l'UE est en mode RRC_CONNECTED, où le message de reconfiguration de connexion RRC indique une configuration complète et comprend une configuration de SRB ;
de vérification du fait qu'une quelconque valeur srb-Identity est comprise ou non dans la configuration de SRB, après réception du message de reconfiguration de connexion RRC ;
d'application d'une configuration de SRB par défaut, d'une configuration RLC par défaut et d'une configuration de canal logique par défaut pour au moins un SRB selon au moins une valeur srb-Identity présente dans la configuration de SRB, quand l'au moins une valeur srb-Identity est comprise dans la configuration de SRB ; et
d'application de la configuration de SRB par défaut, de la configuration RLC par défaut et de la configuration de canal logique par défaut pour un SRB de type 1 (SRB1) quand aucune valeur srb-Identity n'est comprise dans la configuration de SRB ; et
où l'UE prend en charge au moins une fonctionnalité NB-loT ;
où le message de reconfiguration de connexion RRC est un message RRCConnectionReconfiguration ou un message RRCConnectionReconfiguration-NB ; et
où la configuration de SRB est une srb-ToAddModList ou une srb-ToAddModList-NB ; et
d'application de la configuration de SRB par défaut, de la configuration RLC par défaut et de la configuration de canal logique par défaut pour tous les SRB pris en charge par l'UE.

2. L'UE de la revendication 1, où le dispositif de stockage (210) stocke en sus, et le circuit de traitement (200) est en sus configuré pour exécuter, des instructions :
de réception d'un message RRCConnectionReconfiguration en provenance du réseau, quand l'UE est en mode RRC_CONNECTED, où le message RRCConnectionReconfiguration indique une deuxième configuration complète et comprend une deuxième configuration de SRB comprenant au moins une identité de SRB ; et
d'application de la configuration de SRB par défaut, de la configuration RLC par défaut et de la configuration de canal logique par défaut pour au moins un SRB selon l'au moins une identité de SRB.

3. Un équipement utilisateur (UE) pour la gestion d'un support radio de signalisation (SRB) d'une communication par l'Internet des objets à bande étroite (NB-loT), comprenant :
un dispositif de stockage (210) pour le stockage d'instructions ;
un circuit de traitement (200), couplé à le dispositif de stockage (210), où le dispositif de stockage (210) stocke, et le circuit de traitement (200) est configuré pour exécuter, les instructions :
de réception d'un message de reconfiguration de connexion RRC en provenance d'un réseau, quand l'UE est en mode RRC_CONNECTED, où le message de reconfiguration de connexion RRC indique une configuration complète et comprend une configuration de SRB ;
de vérification du fait que la configuration de SRB est une srb-ToAddModList ou une srb-ToAddModList-NB, après réception du message de reconfiguration de connexion RRC ;
d'application d'une configuration de SRB par défaut, d'une configuration RLC par défaut et d'une configuration de canal logique par défaut pour au moins un SRB selon au moins une valeur srb-Identity présente dans la configuration de SRB, si la configuration de SRB est la srb-ToAddModList ; et
d'application de la configuration de SRB par défaut, de la configuration RLC par défaut et de la configuration de canal logique par défaut pour un SRB de type 1 (SRB1) si la configuration de SRB est la srb-ToAddModList-NB ; et
où l'UE prend en charge au moins une fonctionnalité NB-loT ; et
où le message de reconfiguration de connexion RRC est un message RRCConnectionReconfiguration ou un message RRCConnectionReconfiguration-NB ; et
d'application de la configuration de SRB par défaut, de la configuration RLC par défaut et de la configuration de canal logique par défaut pour tous les SRB pris en charge par l'UE.

4. L'UE de la revendication 3, où le dispositif de stockage (210) stocke en sus, et le circuit de traitement (200) est en sus configuré pour exécuter, des instructions :
de réception d'un message RRCConnectionReconfiguration en provenance du réseau, quand l'UE est en mode RRC_CONNECTED, où le message RRCConnectionReconfiguration indique une deuxième configuration complète et comprend une deuxième configuration de SRB comprenant au moins une identité de SRB ; et
d'application de la configuration de SRB par défaut, de la configuration RLC par défaut et de la configuration de canal logique par défaut pour au moins un SRB selon l'au moins une identité de SRB.
